# EUROPEAN PATENT SPECIFICATION

(11) **EP 1 800 027 B1**
(45) Date of publication and mention of the grant of the patent: **09.12.2009**
(21) Application number: 04791878.4
(22) Date of filing: 04.10.2004
(51) Int. Cl.: F16H 55/32, F16H 55/34

(54) **IMPROVED FRICTION WHEEL**
VERBESSERTES REIBRAD
ROUE DE FRICTION AMELIOREE

(43) Date of publication of application: 27.06.2007
(73) Proprietor: Dayco Europe S.R.L. Con Unico Socio, Frazione Chieti Scalo 66013 Chieti (IT)
(72) Inventor: FERRANTE, Camillo, I-66013 Chieti Scalo (IT); ROLANDO, Adriano, I-10086 Rivarolo (IT); TRAPPOLINI, Carlo, I-65016 Montesilvano (IT)
(74) Representative: Franzolin, Luigi
(86) International application number: PCT/IT2004/000544
(87) International publication number: WO 2006/038230

(56) References cited:
- EP-A- 0 015 555
- FR-A- 1 162 819
- FR-A- 1 172 119
- GB-A- 2 011 028
- US-A- 1 403 377
- US-A- 4 140 014
- US-A- 4 324 441

## Description

### TECHNICAL FIELD

The present invention concerns a improved friction wheel.

### BACKGROUND ART

Friction wheels are used, for example, to drive accessories in a motor vehicle and they comprise a disc rotating around an axis coming out of a supporting wall and a peripheral friction ring generally friction-driven by a rotating part, for example a second friction wheel.

In particular, the friction ring is made of elastomer material to increase reliability in the case of damp friction surfaces and it is anchored to a peripheral surface of the disc by direct vulcanisation, treating the peripheral surface for this purpose with an interface layer which allows adhesion between the elastomer material of the friction ring and the peripheral surface of the metal disc.

When it is necessary to drive accessories that require high powers, the friction ring undergoes the action of considerable shear forces which cause high deformations and stress on the interface layer, leading to problems of reliability and duration.

Moreover, the process of direct vulcanisation on the disc is relatively complex, prolonging the realisation times, and it requires a particular mould, involving high production costs.

FR-A-1162819 discloses a friction wheel wherein a disc comprises a first and a second element which, joined together, ensure a proper interference on a reinforced polymeric ring mounted around the disc. However, the configuration of the disc is not cost effective and the assembling procedure requires the operation of joining the two elements of the disc.

### DISCLOSURE OF INVENTION

The aim of the present invention is to realise a friction wheel without the inconveniences listed above.

According to the present invention, a friction wheel is realised as defined in claim 1.

### BRIEF DESCRIPTION OF THE DRAWINGS

For a better understanding of the present invention, some preferred embodiments will now be described, purely as an example without limitation, with reference to the enclosed drawings, in which:
- figure 1 is a side view of the friction wheel according to the present invention;
- figure 2 is a radial section of the friction wheel along the line II-II in figure 1;
- figure 3 is the development of a side view of figure 1;
- figure 4 is the development of a side view of a friction wheel according to further embodiment of the present invention; and
- figure 5 is an enlarged section along the line V-V in figure 4.

### BEST MODE FOR CARRYING OUT THE INVENTION

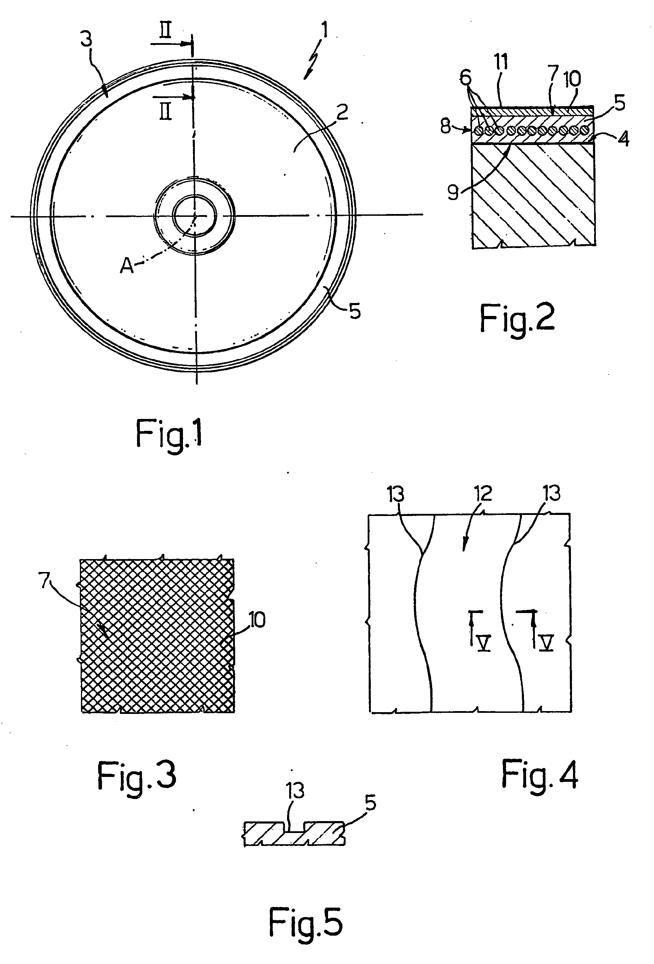

In figure 1, the reference 1 indicates the whole of a friction wheel comprising a rigid disc 2 having an axis A and a belt ring 3 fitted around the circumference on a cylindrical side surface 4 of the disc 2.

In particular, the belt ring 3 comprises a body 5 of elastomer material and a multiplicity of continuous reinforcing filiform elements 6 arranged longitudinally inside the body 5, and an embossed surface layer 7 suited to cooperate by friction with a transmission element, for example a clutch wheel (not illustrated).

The body 5 presents a substantially rectangular cross section 8 defined radially by an annular internal surface 9 in contact with the disc 2 and by the embossed layer 7.

In particular, the embossed layer 7 is formed by a sequence of ridges and hollows even smaller than one millimetre and it is defined by means of an anti-wear fabric 10 obtained according to weaving methods which allow a warp and a weft that reproduce embossing to be obtained. The anti-wear fabric 10 also comprises a surface layer 11 made from a fluorinated plastomer with an elastomer material as additive.

The belt ring 3 is realised independently from the disc 2; in particular, the body 5 is formed by a polymer matrix, for example EPDM, and the filiform elements 6 are realised in polyester and are suitably treated with impregnating agents, for example RFL, to adhere to the polymer matrix. The belt ring 3, which comprises the polymer matrix, the filiform elements 6 and the anti-wear fabric 10, is realised on a mould with a moulding and vulcanising process similar to that used for the belts.

When the vulcanising phase is ended, the belt ring 3 is non-deformed and the internal surface 9 presents a diameter smaller than that of the side surface 4 of the disc 2.

The operation of the friction wheel 1 is as follows.

In the assembly phase of the friction wheel 1, the belt ring 3 is forced onto the disc 2, inducing a pre-tensioning in the filiform elements 6 which allows high friction values to be obtained between the side surface 4 of the disc 2 and the internal surface 7 of the belt ring 3.

Thanks to the pre-tensioning of the filiform elements 6, the friction between the side surface 4 and the internal surface 9 is such that the belt ring 3 is integral with the disc 2 under load.

Moreover, the sequence of ridges and hollows on the surface of the embossed layer 7 presents different characteristics of rigidity in comparison with a smooth back forming a soft surface layer, and therefore allows a gradual distribution of the pressure of contact with the clutch wheel.

During operation, the polyester fibres of the filiform elements 6 tend to contract as the working temperature rises, increasing the interference between the belt ring 3 and the disc 2.

The advantages of this friction wheel are the following.

The presence of the reinforcing elements 6 inside the belt ring 3 prevents excessive deformations of the body 5 under load, while the pre-tensioning due to the interference of assembly and the additional tensioning caused by the increase in temperature allow the transfer of considerable strains.

The assembly of the belt ring 3 is rapid and requires simple tools for performing the fitting operation.

Moreover, the roughness of the embossed layer 7 increases the friction coefficient, favouring mechanical transmission, and constitutes a soft layer which makes the contact pressure gradual and helps reduce noise.

The embossing is defined by means of the anti-wear fabric 10 which also increases the reliability of the friction wheel 1 in particularly severe load conditions.

Lastly it is clear that modifications and variations may be made to the friction wheel described and illustrated here without departing from the field of protection of the present invention, as defined in the enclosed claims.

In particular, the embossed layer 7 may be impressed directly on the body 5 by moulding or by means of machining processes.

Alternatively, (figures 4 and 5) the embossed layer 7 may be replaced by a grooved surface 12 presenting a multiplicity of grooves 13 having an undulating trend on the circumference and a rectangular cross section to favour the elimination of excess humidity from the grooved surface 12 itself.

As regards particularly heavy applications, it is also possible to provide an adhesive layer to increase the cohesion between the disc 2 and the belt ring 3.

The materials used may be different from those described or they be used in combination, for example the filiform elements 6 may comprise aramidic fibres or carbon fibres or glass fibres individually or combinations of these, and they may even be associated with a disc 2 presenting an adhesive layer or knurling for coupling.

## Claims

1. A friction wheel (1) comprising a disc (2) having an axis (A) and a circumferential side surface (4), and a belt ring (3) fitted to said side surface (4), said belt ring (3) comprising an elastomer body (5) and at least one reinforcing element (6) located circumferentially inside said body (5), **characterised in that** said side surface (4) is cylindrical, said belt ring (3) being forced onto said side surface (4) by interference so as to induce a pre-tensioning in said reinforcing element (6), said belt ring (3) having an internal surface (9) with a smaller diameter than said side surface (4) of said disc (2) when non-deformed.

2. Friction wheel according to claim 1, **characterised in that** said at least one reinforcing element (6) is filiform.

3. Friction wheel according to claim 1 or 2, **characterised in that** said belt ring (3) comprises an embossed layer (7) opposite said internal surface (9) with respect to said at least one reinforcing element (6).

4. Friction wheel according to claim 3, **characterised in that** said embossed layer (7) is defined by an anti-wear fabric (10).

5. Friction wheel according to claim 4, **characterised in that** said anti-wear fabric (10) presents an external layer (11) comprising a fluorinated plastomer.

6. Friction wheel according to claim 1 or 2, **characterised in that** said belt ring (3) comprises a grooved surface (12) opposite said internal surface (9) with respect to said at least one reinforcing element (6).

7. Friction wheel according to claim 6, **characterised in that** said grooved surface (12) comprises at least one circumferential groove (13).

8. Method of assembling a friction wheel as defined in claim 1, the friction wheel (1) comprising a disc (2) having an axis (A) and presenting a cylindrical, circumferential side surface (4), and a belt ring (3) comprising an elastomer body (5) and at least one reinforcing element (6) located circumferentially within said body (5), the method comprising the steps of:
- realising said disc (2),
- realising said belt ring (3) independently of said disc (2), so that said belt ring (3) has an internal surface (9) with a smaller diameter than said side surface (4); and
- forcing said belt ring (3) onto said side surface (4) by interference so as induce a pre-tensioning in said reinforcing element (6).

## Patentansprüche

1. Reibrad (1), enthaltend eine Scheibe (2), die eine Achse (A) und eine Umfangsseitenfläche (4) hat, und einen Riemenring (3), der an die Seitenfläche (4) angepasst ist, wobei der Riemenring (3) einen Elastomerkörper (5) und wenigstens ein Verstärkungselement (6) enthält, das in Umfangsrichtung im Körper (5) angeordnet ist, **dadurch gekennzeichnet, dass** die Seitenfläche (4) zylindrisch ist, wobei der Riemenring (3) auf die Seitenfläche (4) durch Fremdeinwirkung gedrückt ist, um so eine Vorspannung im Verstärkungselement (6) hervorzurufen, wobei der Riemenring (3) eine Innenfläche (9) mit einem geringeren Durchmesser als die Seitenfläche (4) der Scheibe (2) aufweist, wenn er nicht verformt ist.

2. Reibrad nach Anspruch 1, **dadurch gekennzeichnet, dass** wenigstens ein Verstärkungselement (6) fadenförmig ist.

3. Reibrad nach Anspruch 1 oder 2, **dadurch gekennzeichnet, dass** der Riemenring (3) eine geprägte Schicht (7) enthält, die der Innenfläche (9) im Bezug auf das wenigstens eine Verstärkungselement (6) gegenüberliegt.

4. Reibrad nach Anspruch 3, **dadurch gekennzeichnet, dass** die geprägte Schicht (7) durch ein abnutzungsfestes Gewebe (10) ausgebildet ist.

5. Reibrad nach Anspruch 4, **dadurch gekennzeichnet, dass** das abnutzungsfeste Gewebe (10) eine äußere Schicht (11) aufweist, die einen fluorierten Plastomer enthält.

6. Reibrad nach Anspruch 1 oder 2, **dadurch gekennzeichnet, dass** der Riemenring (3) eine gerillte Oberfläche (12) enthält, die der Innenfläche (9) im Bezug auf das wenigstens eine Verstärkungselement (6) gegenüberliegt.

7. Reibrad nach Anspruch 6, **dadurch gekennzeichnet, dass** die gerillte Oberfläche (12) wenigstens eine in Umfangsrichtung verlaufende Rille (13) enthält.

8. Verfahren zum Zusammensetzen eines Reibrades nach Anspruch 1, wobei das Reibrad (1) enthält: eine Scheibe (2), die eine Achse (A) und eine zylindrische Umfangsseitenfläche (4) hat, und einen Riemenring (3), der einen Elastomerkörper (5) und wenigstens ein Verstärkungselement (6) aufweist, das in Umfangsrichtung im Körper (5) angeordnet ist, wobei das Verfahren folgeende Schritte umfasst:
- Herstellen der Scheibe (2),
- Herstellen des Riemenrings (3) unabhängig von der Scheibe (2), so dass der Riemenring (3) eine Innenfläche (9) mit einem geringeren Durchmesser als die Seitenfläche (4) hat; und
- Drücken des Riemenrings (3) auf die Seitenfläche (4) durch Fremdeinwirkung, um so eine Vorspannung im Verstärkungselement (6) hervorzurufen.

## Revendications

1. Roue à friction (1) comprenant un disque (2) comportant un axe (A) et une surface latérale circonférentielle (4) ainsi qu'une couronne de courroie (3) adaptée sur ladite surface latérale (4), ladite couronne de courroie (3) comprenant un corps élastomère (5) et au moins un élément de renfort (6) située de façon circonférentielle à l'intérieur dudit corps (5), **caractérisée en ce que** ladite surface latérale (4) est cylindrique, ladite couronne de courroie (3) étant forcée sur ladite surface latérale (4) par ajustement serré de façon à induire une tension préalable dans ledit élément de renfort (6), ladite couronne de courroie (3) ayant une surface interne (9) de diamètre plus petit ladite surface latérale (4) dudit disque (2) en l'absence de déformation.

2. Roue à friction selon la revendication 1, **caractérisée en ce que** ledit au moins un élément de renfort (6) est filiforme.

3. Roue à friction selon la revendication 1 ou 2, **caractérisée en ce que** ladite couronne de courroie (3) comprend une couche estampée ou nervurée (7) opposée à ladite surface interne (9) par rapport audit au moins un élément de renfort (6).

4. Roue à friction selon la revendication 3, **caractérisée en ce que** ladite couche estampée ou nervurée (7) est définie par un tissu anti-usure (10).

5. Roue à friction selon la revendication 4, **caractérisée en ce que** ledit tissu anti-usure (10) présente une couche externe (11) comprenant un élastomère ou plastomère fluoré.

6. Roue à friction selon la revendication 1 ou 2, **caractérisée en ce que** ladite couronne de courroie (3) comprend une surface rainurée (12) opposée à ladite surface interne (9) par rapport audit au moins un élément de renfort (6).

7. Roue à friction selon la revendication 6, **caractérisée en ce que** ladite surface rainurée (12) comprend au moins une rainure circonférentielle (13).

8. Procédé d'assemblage d'une roue à friction selon la revendication 1, la roue à friction (1) comprenant un disque (2) comportant un axe (A) et présentant une surface latérale circonférentielle cylindrique (4) et une couronne de courroie (3) comprenant un corps élastomère (5) et au moins un élément de renfort (6) située de façon circonférentielle à l'intérieur dudit corps (5), la méthode comprenant les étapes consistant à :
- réaliser ledit disque (2),
- réaliser ladite couronne de courroie (3) indépendamment dudit disque (2), de sorte que ladite couronne pour courroie (3) ait une surface interne (9) de diamètre plus petit que ladite surface latérale (4) et
- forcer ladite couronne de courroie (3) à s'appliquer sur ladite surface latérale (4) par ajustement serré de façon à induire une tension préalable dans ledit élément de renfort (6).
